Europäisches Patentamt

European Patent Office

Office européen des brevets

(11) Veröffentlichungsnummer: **0 263 260**
**A1**

(12) **EUROPÄISCHE PATENTANMELDUNG**

(21) Anmeldenummer: **87111460.9**

(22) Anmeldetag: **07.08.87**

(51) Int. Cl.⁴ **G01L 3/10**

(30) Priorität: **30.08.86 DE 3629610**

(43) Veröffentlichungstag der Anmeldung:
**13.04.88 Patentblatt 88/15**

(84) Benannte Vertragsstaaten:
**AT DE FR GB IT SE**

(71) Anmelder: **VACUUMSCHMELZE GMBH**
**Grüner Weg 37 Postfach 2253**
**D-6450 Hanau 1(DE)**

(72) Erfinder: **Erb, Otto, Dr.**
**Alsfelder Strasse 16**
**D-6310 Grünberg(DE)**

(54) **Koaxialer Drehmomentsensor.**

(57) Ein koaxialer Drehmomentsensor, bei dem Primärwicklungen (11,12) und Sekundärwicklungen (6,7) eine Welle (1) umgeben, die mit eine magnetische Vorzugsrichtung aufweisenden Streifen 3 und 4 versehen ist, wird gegen Verschiebungen der Welle (1) unempfindlicher, wenn die Streifen (3,4) in Richtung der Wellenachse (2) breit gegenüber der Breite der Sekundärwicklungen (6,7) ist. Besonders unempfindlich wird die Anordnung, wenn mehrere Primärwicklungen (11,12) vorgesehen werden und wenn sich die Primärwicklungen in Richtung der Wellenachse neben den Sekundärwicklungen (6,7) befinden.

FIG 2

EP 0 263 260 A1

## Koaxialer Drehmomentsensor

Die Erfindung betrifft einen koaxialen Drehmomentsensor, bei dem mindestens zwei Streifen aus weichmagnetischem Material nebeneinander um den Umfang einer Welle gewickelt sind, bei dem die Streifen je eine weichmagnetische Vorzugsrichtung haben, die gegensinnig in einem Winkel zwischen 0 und 90° zur Wellenachse- verlaufen und bei dem die Streifen von mindestens einer Primärwicklung und je einer Sekundärwicklung umgeben sind.

Derartige Drehmomentsensoren sind beispielsweise aus der Zeitschrift IEEE TRANSACTIONS ON MAGNETICS, Vol. Mag. 20, September 1984, Seiten 942 bis 947 und 951 bis 953 bekannt. Hier werden Streifen von amorphem Material mit Abstand zueinander und mit einem Winkel von 45° zu einer Wellenachse auf den Umfang der Welle geklebt. Die Welle ist von einer Erregungs-und zwei Sekundärspulen konzentrisch umgeben. Die in den Sekundärspulen erzeugten Spannungen können beispielsweise in einer Brückenschaltung verglichen und ausgewertet werden. Dadurch entsteht ein Signal, das weitgehend proportional dem Drehmoment ist, dem die betreffende Welle ausgesetzt wird. Dieses Signal ist vom Drehmoment abhängig, da dies eine Verformung der Welle und der damit verbundenen Streifen bewirkt und da sich die magnetischen Eigenschaften derartiger ferromagnetischer Materialien ändern, wenn sie einer mechanischen Spannung ausgesetzt werden.

Weiterhin ist aus der DE-OS 33 19 449 ein magnetoelastischer Drehmomentgeber bekannt, bei dem auf eine Welle eine Meßhülse aufgebracht ist, die in zwei parallelen, ringförmigen Zonen in unterschiedlichem Winkel zur Wellenachse parallele Schlitze aufweisen. Diese Zonen der Meßhülsen besitzen eine magnetische Vorzugsrichtung, die durch ein in der Welle wirkendes Drehmoment unterschiedliche Spannungszustände und damit ein unterschiedliches magnetisches Verhalten bewirken. Um ein Meßsignal zu erzeugen, ist jede magnetische Zone von einer Sekundärwicklung und jede Sekundärwicklung wiederum von einer Primärwicklung umgeben.

Aufgabe der vorliegenden Erfindung ist es, eine Anordnung anzugeben, bei der eine Verfälschung des Meßsignals durch eine Verschiebung der Welle innerhalb der sie umgebenden Wicklungen weitgehend verhindert wird.

Diese Aufgabe wird erfindungsgemäß dadurch gelöst, daß die Breite der Streifen in Richtung der Wellenachse mindestens doppelt so groß ist, wie die Breite der zugehörigen Sekundärwicklungen in gleicher Richtung, und daß die Sekundärwicklungen so justiert sind, daß sie den mittleren Teil des zugehörigen Streifens umgeben.

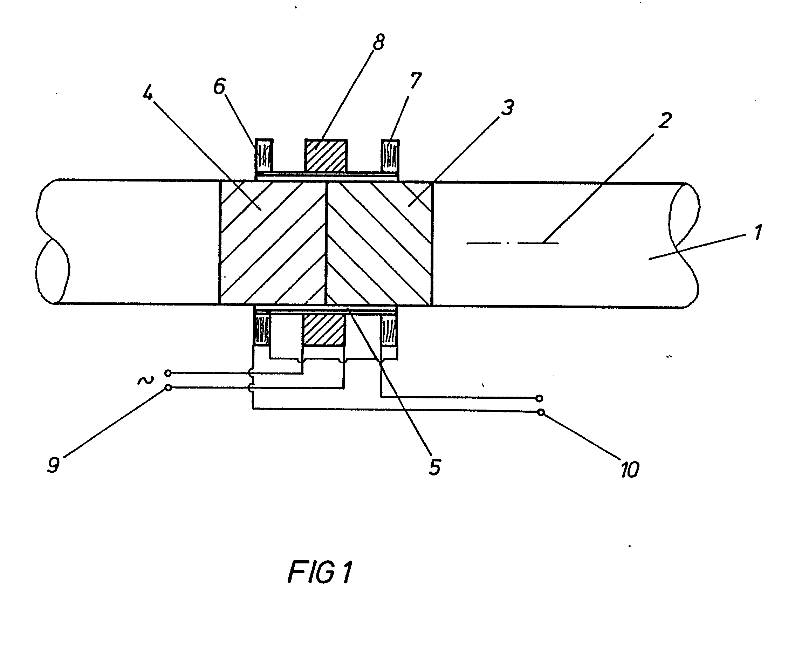

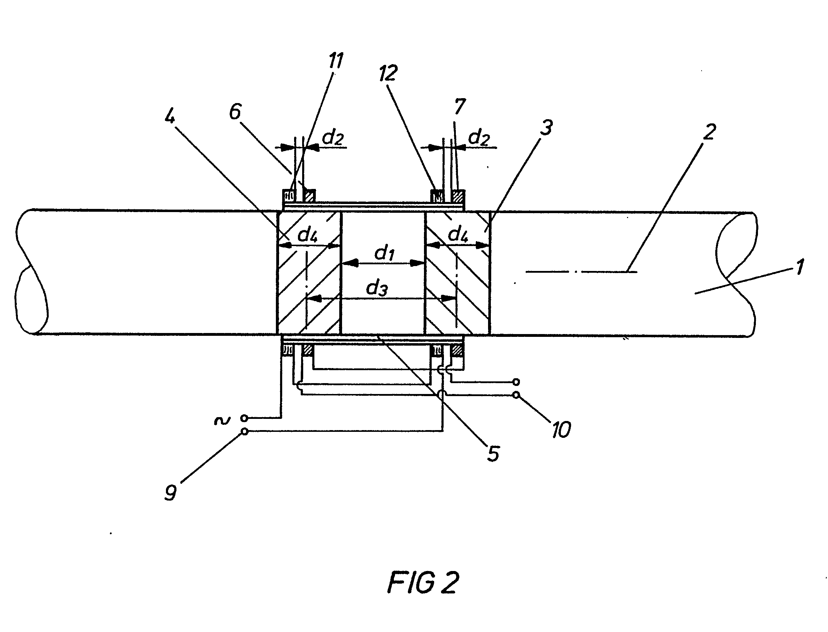

Zwei Ausführungsbeispiele der Erfindung sind anhand der Figuren 1 und 2 beschrieben.

In Figur 1 ist eine Welle 1 mit der Wellenachse 2 von zwei Streifen 3 und 4 umgeben. Diese Streifen bestehen aus weichmagnetischem - vorzugsweise amorphem - Material und besitzen eine magnetische Vorzugsrichtung, die durch die Richtung der Schraffur innerhalb der Streifen 3 und 4 angedeutet ist und die vorzugsweise im Winkel von 45° zur Richtung der Wellenachse 2 verläuft. Umgeben ist die Welle 1 von einem Spulenkörper 5, der - in Richtung der Wellenachse 2 gesehen - außen zwei Sekundärwicklungen 6 und 7 und in der Mitte eine Primärwicklung 8 trägt. Die Primärwicklung 8 ist an eine Wechselspannungsquelle 9 angeschlossen und die Sekundärwicklungen sind zueinander in Reihe geschaltet und mit Meßklemmen 10 verbunden, an denen das Ausgangssignal ansteht.

Durch die Anordnung von Primär-und Sekundärwicklungen erreicht man, daß die Sekundärwicklungen 6 und 7 in Richtung der Wellenachse 2 nur eine geringe Breite aufweisen müssen, so daß das Verhältnis von Breite der Streifen 3 und 4 zu der Breite der Wicklungen 6 und 7 leicht relativ groß gemacht werden kann. Die Anordnung der Primärwicklung 8 in Richtung der Wellenachse 2 neben - hier zwischen - den Sekundärwicklungen 6 und 7 ergibt den Vorteil, daß -unabhängig von Außendurchmesser der Sekundärwicklungen - sich die Primärwicklung nahe an der Welle 1 befindet, so daß die geringstmögliche Energie notwendig ist, um eine ausreichende Durchflutung der Streifen 3 und 4 zu gewährleisten. Bei einer Verschiebung der Welle 1 gegenüber dem Spulenkörper 5 in Richtung der Wellenachse 2 ergibt sich nur eine geringe Änderung des Ausgangssignals, da Randeinflüsse der Streifen 3 und 4 weitgehend ausgeschlossen sind. Eine derartige Verschiebung kann beispielsweise durch Justierfehler oder durch das Erwärmen der Welle 1 stattfinden.

Das Ausführungsbeispiel nach Figur 2 besitzt gegenüber der Anordnung nach Figur 1 den Vorteil, daß die magnetischen Kreise der Sekundärwicklungen 6 und 7 durch den Abstand $d_3$ der Sekundärwicklungen 6 und 7 und Streifen 3 und 4 voneinander weitgehend entkoppelt sind. Die Breite d₄ der Streifen 3 und 4 ist wiederum groß gegenüber der entsprechenden Breite der Sekundärwicklungen 6 und 7. Der innere Abstand der Streifen 3 und 4 voneinander ist mit $d_1$ bezeichnet und sollte umso größer sein, je weichmagnetischer das Material der Welle 1 ist.

In Richtung der Wellenachse 2 befindet sich links neben jeder Sekundärwicklung 6 und 7 eine Primärwicklung 11 und 12. Die Primärwicklungen sind in Reihe geschaltet und an die Wechselspannungsquelle 9 angeschlossen. Der Abstand $d_2$ zwischen der Primärwicklung 11 und der Sekundärwicklung 6 bzw. zwischen der Primärwicklung 12 und der Sekundärwicklung 7 kann zur Nullpunktjustierung des Drehmomentsensors in gewissen Grenzen verändert werden.

Falls sich bei diesem Ausführunsbeispiel die Welle 1 gegenüber dem Spulenkörper 5 in Richtung der Wellenachse 2 verschiebt, bleiben nicht nur die Sekundärwicklungen weitgehend im mittleren Bereich der Streifen 3 und 4, sondern es wird auch das von der Primärwicklung 11 und das von der Primärwicklung 12 erzeugte Magnetfeld durch die Verschiebung in gleichem Sinne beeinflußt, so daß eine auch gegenüber dem Ausführungsbeispiel nach Figur 1 verringerte Empfindlichkeit des Drehmomentsensors gegen Verschiebungen von Welle 1 und Spulenkörper 5 gegeben ist.

Weitere beispielhafte Anordnungen können sich ergeben, wenn die Primärwicklungen 11 und 12 so neben den Sekundärwicklungen 6 und 7 angeordnet sind, daß die Primärwicklungen sich außen und die Sekundärwicklungen sich innen befinden. Hier wird zwar bei einer Verschiebung der Welle 1 in Richtung der Wellenachse 2 das von der jeweiligen Primärwicklung erzeugte Feld nicht so gleichmäßig beeinflußt wie beim Ausführungsbeispiel nach Figur 2, andererseits erreicht man eine bessere Entkopplung der Sekundär wicklungen 6 und 7 voneinander bei gleichem Abstand $d_1$ zwischen den Streifen 3 und 4. Eine derartige Anordnung ist besonders für Wellen aus sehr weichmagnetischem Material vorteilhaft.

Es ist auch möglich, die Vorteile der zuletztgenannten Anordnung mit denen der Anordnung nach Figur 2 zu verbinden, wenn man für jede Sekundärwicklung 6 und 7 je zwei Primärwicklungen vorsieht und sie so anordnet, daß sich die Sekundärwicklungen zwischen je zwei Primärwicklungen befinden.

Eine weitere Verringerung der Empfindlichkeit gegen Verschiebungen der Welle 1 läßt sich durch stirnseitige Abschirmungen des Spulenkörpers 5 erreichen, da diese die Ausdehnung des von den Primärwicklungen erzeugten Magnetfeldes in Richtung der Wellenachse nach außen beschränken und damit den Einfluß der äußeren Ränder der Streifen 3 und 4 vermindern.

## Ansprüche

1. Koaxialer Drehmomentsensor, bei dem mindestens zwei Streifen (3,4) aus weichmagnetischem Material nebeneinander um den Umfang einer Welle (1) gewickelt sind, bei dem die Streifen (3,4) je eine weichmagnetische Vorzugsrichtung haben, die gegensinnig in einem Winkel zwischen 0 und 90° zur Wellenachse (2) verlaufen und bei dem die Streifen (3,4) von mindestens einer Primärwicklung (8) und je einer Sekundärwicklung (6,7) umgeben sind,
**dadurch gekennzeichnet,**
daß die Breite der Streifen (3,4) in Richtung der Wellenachse (2) mindestens doppelt so groß ist, wie die Breite der zugehörigen Sekundärwicklungen (6,7) in gleicher Richtung, und daß die Sekundärwicklungen (6,7) so justiert sind, daß sie den mittleren Teil des zugehörigen Streifens (3,4) umgeben.

2. Koaxialer Drehmomentsensor nach Anspruch 1,
**dadurch gekennzeichnet,**
daß die Breite der Streifen (3,4) mindestens das 10-fache der Breite der zugehörigen Sekundärwicklungen (6,7) beträgt.

3. Koaxialer Drehmomentsensor nach Anspruch 1 oder 2,
**dadurch gekennzeichnet,**
daß eine gemeinsame Primärwicklung (8) vorgesehen und zwischen den Sekundärwicklungen (6,7) angeordnet ist.

4. Koaxialer Drehmomentsensor nach Anspruch 1 oder 2,
**dadurch gekennzeichnet,**
daß Primär-und Sekundärwicklungen auf den gleichen Spulenkörper (5) gewickelt sind.

5. Koaxialer Drehmomentsensor nach Anspruch 1 oder 2,
**dadurch gekennzeichnet,**
daß für jede Sekundärwicklung (6,7) eine Primärwicklung (11,12) vorgesehen ist, die in Richtung der Wellenachse (2) sich neben der zugehörigen Sekundärwicklung (6,7) befindet und daß die Breite des Streifens (3,4) mindestens so groß ist, daß auch die Primärwicklung (11,12) den Streifen (3,4) umgibt.

6. Koaxialer Drehmomentsensor nach Anspruch 1,
**dadurch gekennzeichnet,**
daß für jede Sekundärwicklung (6,7) eine Primärwicklung (11,12) vorgesehen ist, die - in Richtung der Wellenachse (2) gesehen - in gleicher Richtung gegenüber der Sekundärwicklung (6,7) verschoben neben dieser angeordnet ist.

7. Koaxialer Drehmomentsensor nach Anspruch 1,
**dadurch gekennzeichnet,**

daß für jede Sekundärwicklung (6,7) eine Primärwicklung (11,12) vorgesehen ist und daß die Primärwicklungen in Richtung der Wellenachse (2) neben den Sekundärwicklungen (6,7) so angebracht sind, daß sich die Sekundärwicklungen (6,7) innen und die Primärwicklungen (11,12) außen befinden.

8. Koaxialer Drehmomentsensor nach Anspruch 1,

**dadurch gekennzeichnet,**

daß Primär-und Sekundärwicklungen in Richtung der Wellenachse (2) nebeneinander angeordnet und zum justieren des Drehmomentsensors gegeneinander verschiebbar sind.

9. Koaxialer Drehmomentsensor nach Anspruch 1,

**dadurch gekennzeichnet,**

daß für jede Sekundärwicklung (6,7) zwei Primärwicklungen vorgesehen und diese zu beiden Seiten neben der zugehörigen Sekundärwicklung in Richtung der Wellenachse (2) angeordnet sind.

FIG 1

FIG 2

0 263 260

86 P 9563

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| D,A | DE-A-3 319 449 (ASEA AB)<br>* ganze Schrift *<br>--- | 1 | G 01 L 3/10 |
| D,A | IEEE TRANSACTIONS ON MAGNETICS, Band MAG-20, Nr. 5, September 1984, Seiten 942-947; K. MOHRI "Review of recent advances in the field of amorphous-metal sensors and transducers"; Seiten 951-953; I. SASADA et al.: "Torque transducers with stress-sensitive amorphous ribbons of chevron-pattern"<br>* Seiten 942-947, 951-953 *<br>----- | 1 | |

**RECHERCHIERTE SACHGEBIETE (Int. Cl.3)**

G 01 L 3/10

Der vorliegende Recherchenbericht wurde für alle Patentansprüche erstellt

| Recherchenort | Abschlußdatum der Recherche | Prüfer |
|---|---|---|
| BERLIN | 03-12-1987 | KOEHN G |